# EUROPÄISCHE PATENTSCHRIFT

(11) **EP 3 644 570 B1**
(45) Veröffentlichungstag und Bekanntmachung des Hinweises auf die Patenterteilung: **28.07.2021**
(21) Anmeldenummer: 18201981.0
(22) Anmeldetag: 23.10.2018
(51) Int. Cl.: H04L 29/06, H04L 12/24, H04L 12/46, H04L 12/28, G05B 15/02

(54) **FIREWALL FÜR GEBÄUDENETZWERKE, EIN ENTSPRECHENDES SYSTEM UND VERFAHREN SOWIE EIN COMPUTERLESBARES MEDIUM**
FIREWALL FOR BUILDING NETWORKS, A CORRESPONDING SYSTEM AND METHOD AND COMPUTER READABLE MEDIUM
PARE-FEU POUR RÉSEAUX DE BÂTIMENT, SYSTÈME ET PROCÉDÉ CORRESPONDANTS AINSI QUE SUPPORT LISIBLE PAR ORDINATEUR

(43) Veröffentlichungstag der Anmeldung: 29.04.2020
(73) Patentinhaber: ise Individuelle Software und Elektronik GmbH, 26122 Oldenburg (DE)
(72) Erfinder: SAHM, Christoph, 26131 Oldenburg (DE)
(74) Vertreter: Angerhausen, Christoph

(56) Entgegenhaltungen:
- US-A- 5 878 231
- BRIAN KOMAR ET AL: "Firewalls for Dummies, Creating Demilitarized Zones with a Single Firewall", 1. Januar 2003 (2003-01-01), FIREWALLS FOR DUMMIES, WILEY, NEW YORK, PAGE(S) 179 - 210, XP002603391, ISBN: 978-0-7645-4048-6 * Seite 180 - Seite 196 * * Abbildungen 11-1 * * Tabellen 11-3 *
- Anonymous: "Firewall (computing) - Wikipedia", , 24. Januar 2018 (2018-01-24), XP055574970, Gefunden im Internet: URL:https://en.wikipedia.org/w/index.php?t itle=Firewall_(computing)&oldid=822119349 [gefunden am 2019-03-27]
- Anonymous: "How to enable Web Access of the ASUS wireless router from WAN?(ASUSWRT)", , 8. September 2016 (2016-09-08), XP055581399, Gefunden im Internet: URL:https://web.archive.org/web/2016090808 2750/https://www.asus.com/support/FAQ/1000 926/ [gefunden am 2019-04-16]
- Anonymous: "BridgingAndRouting - OpenVPN Community", , 21 August 2018 (2018-08-21), XP055699801, Retrieved from the Internet: URL:https://web.archive.org/web/2018082101 0728/https:/community.openvpn.net/openvpn/ wiki/BridgingAndRouting [retrieved on 2020-05-29]

## Beschreibung

Die vorliegende Erfindung bezieht sich auf eine Firewall zur Verarbeitung von Zugriffen auf bestimmte Netzwerke, insbesondere zur Verarbeitung von Zugriffen auf Netzwerke in einem Gebäude. Zugriffe sind Datenpakete, die an der Firewall eintreffen und an eine IP-Adresse adressiert sind, die der Firewall zugeordnet ist, also entweder eine IP-Adresse, die von der Firewall selbst verwendet wird, oder eine IP-Adresse, die einem Netzwerk oder Netzwerkknoten entspricht, der hinter der Firewall liegt und nur über diese erreicht werden kann. Zugriffe erfolgen von einem oder mehreren Knoten. Ein Knoten ist ein mobiles oder stationäres Endgerät, das über eine lokale oder globale IP-Adresse verfügt und zur Kommunikation mit anderen Geräten eingerichtet ist.

Im folgenden umfassen Bezugnahmen auf IP-Adressen, Herkunftadressen, Zieladressen sowie "Adressen" immer eine IP-Adresse und/oder einen Port.

### HINTERGRUND

In Gebäuden werden zunehmend ortsgebundene Netzwerke eingesetzt, deren Knoten bestimmte Funktionen an dem Gebäude durchführen, beispielsweise Kommunikation eines Bewohners in einer Wohnung mit einer Zugangseinrichtung am Gebäudeeingang oder Bedienung einer Fensterfunktion aus der Ferne. Derartige Funktionen können von innerhalb des Netzwerks oder auch von außerhalb, beispielsweise von einem Mobilgerät aus, aufgerufen werden. Derartige Kommunikationen werden mittels drahtloser Geräte, beispielsweise Smartphones, und drahtgebundener Geräte, beispielsweise einem fest eingebauten Terminal, geführt.

In einem Gebäude können mehrere separate Netzwerke installiert sein. Beispielsweise kann ein Mehrparteienhaus über ein erstes Netzwerk verfügen, das die Steuerung einer Haustür von jeder Wohnung aus gestattet, und kann ferner über je ein weiteres Netzwerk je Wohnung verfügen, das den Bewohnern ein Bedienen der in dieser Wohnung verfügbaren technischen Funktionen ermöglicht.

Für den Zugriff von einem Knoten eines ersten Netzwerks auf den Knoten eines zweiten Netzwerks ist ein Router notwendig, der den Zugriff an geeigneter Stelle erkennt und auf das richtige Netzwerk weiterleitet. Um beliebigen Zugriff zwischen den Knoten eines Netzwerks auf Knoten eines anderen Netzwerks zu regulieren, existieren Firewalls, die in Hardware und/oder Software ausgeführt sind und anhand bestimmter Regeln die einzelnen Zugriffe prüfen und sie zulassen oder verweigern.

Wenn ein Gebäude über mehrere Netzwerke verfügt und auf diese Netzwerke auch von außerhalb des Gebäudes zugegriffen werden kann, ergeben sich Probleme hinsichtlich der Anordnung und Anzahl von Firewalls, um sämtliche möglichen Zugriffe zu kontrollieren.

In "BRIAN KOMAR ET AL: 'Firewalls for Dummies, Creating Demilitarized Zones with a Single Firewall', 1. Januar 2003 (2003-01-01), FIREWALLS FOR DUMMIES, WILEY, NEW YORK, PAGE(S) 179-210)", ist eine Firewall offenbart, die zwischen drei Seiten vermittelt. Zugriffe von einer der drei Seiten werden mittels einer Liste von Regeln geprüft, und es wird entschieden, ob die Zugriffe zugelassen, verweigert oder protokolliert werden sollen.

US 5 878 231 A offenbart eine Firewall zwischen drei Netzwerken, wobei die Firewall eingerichtet ist, Datenpakete dieser Netzwerke unter bestimmten Bedingungen passieren zu lassen.

In "Anonymous: 'Firewall (computing) - Wikipedia', 24. Januar 2018 (2018-01-24)" ist eine Firewall offenbart, die in der Lage ist, externe Zugriffe anhand von Protokollen und jeweiligen Anwendungen zu analysieren.

In "Anonymous: 'How to enable Web Access of the ASUS wireless router from WAN? (ASUSWRT)', 8. September 2016 (2016-09-08)" ist ein Zugriff auf eine Firewall mittels IP-Adresse offenbart.

In "Anonymous: 'BridgingAndRouting - OpenVPN Community", 21. August 2018 (2018-08-21)" ist eine Firewall offenbart, die über Schnittstellen etho und eth1 mit je einem Netzwerk verbunden ist. Auf der Firewall läuft eine Anwendung "openvpn", die mit einer Schnittstelle "tuno" verbunden ist.

### ZUSAMMENFASSUNG

Der hier offenbarten Erfindung liegt die Aufgabe zugrunde, Zugriffe zwischen zwei oder mehr Netzwerken zu kontrollieren, insbesondere auch Zugriffe, die von außerhalb eines dieser Netzwerke vorgenommen werden.

Die Erfindung umfasst eine Firewall gemäß dem Anspruch 1.

Die Anwendung kann beispielsweise zum Einrichten einer interaktiven Sitzung mit einem Knoten eingerichtet sein, von dem ein Zugriff stammt. Insbesondere wird eine derartige Sitzung über einen Tunnel zwischen dem Knoten und der Firewall eingerichtet und ein Protokoll des Zugriffs mit einem Protokoll eines der lokalen Netzwerke kombiniert.

Weitere Ausführungsformen betreffen ein System gemäß dem Anspruch 3.

Einer der Zugriffe kann an die Anwendung auf der Firewall übermittelt werden, insbesondere zur Einrichtung einer interaktiven Sitzung zwischen der Anwendung und einem Knoten, von dem der Zugriff erfolgt, wobei die Sitzung insbesondere der Konfiguration der Firewall dient.

In bestimmten Ausführungsformen gehört die IP-Adresse insbesondere zu dem Adressraum eines der wenigstens zwei lokalen Netzwerke.

Darüber hinaus kann ein Zugriff auf eines der lokalen Netzwerke über ein zweites der lokalen Netzwerke übermittelt werden, wobei der Zugriff insbesondere mittels eines Tunnels übermittelt wird, der ein Protokoll des ersten lokalen Netzwerks mit einem Protokoll des zweiten lokalen Netzwerks kombiniert.

Eines der Protokolle ist beispielsweise das HTTPS/Websocket-Protokoll oder das VPN-Protokoll.

Die Erfindung umfasst auch ein Verfahren gemäß dem Anspruch 8.

Ferner kann das Verfahren Übermitteln des Zugriffs an ein erstes der lokalen Netzwerke über ein zweites der lokalen Netzwerke umfassen, wobei der Zugriff insbesondere mittels eines Tunnels übermittelt wird, der ein Protokoll des ersten lokalen Netzwerks mit einem Protokoll des zweiten lokalen Netzwerks kombiniert.

Außerdem kann die Erfindung durch ein computerlesbares Medium mit darauf gespeicherten Befehlen bereitgestellt werden, die bei Ausführung durch einen Prozessor das vorgenannte Verfahren durchführen.

### KURZE BESCHREIBUNG DER ZEICHNUNGEN

Figur 1 zeigt eine beispielhafte herkömmliche Anordnung mehrerer Firewalls in einem Netzwerk.
Figur 2 zeigt eine erfindungsgemäße Anordnung einer Firewall in einem Netzwerk.
Figur 3 zeigt ein erfindungsgemäßes Verfahren.

### AUSFÜHRLICHE BESCHREIBUNG

Bekannt sind Firewalls, die den Datenverkehr zwischen genau zwei Netzwerken kontrollieren. Wenn der Datenverkehr Zugriffe auf mehr als zwei Netzwerke umfasst, könnte für jede Kombination aus zwei der Netzwerke eine jeweilige Firewall installiert werden, die die Zugriffe zwischen diesen beiden Netzwerken kontrolliert. Dies stellt einen erheblichen Aufwand dar, weil die Anzahl der Kombinationen von zwei Netzwerken im Verhältnis zu der Anzahl der Netzwerke überproportional steigt. Außerdem müssen diese zahlreichen Firewalls separat konfiguriert werden, beispielsweise bei Änderungen an einem oder mehreren der Netzwerke, oder wenn Regeln geändert werden sollen.

Eine Ausführungsform der Erfindung umfasst eine Firewall, die mit wenigstens zwei lokalen Netzwerken und wenigstens einem weiteren Knoten oder Netzwerk außerhalb der lokalen Netzwerke verbunden ist. Erkennt die Firewall einen Zugriff, beispielsweise von einer Adresse innerhalb oder außerhalb eines der wenigstens zwei Netzwerke auf einen Knoten innerhalb eines der Netzwerke, leitet sie den Zugriff an dasjenige Netzwerk, das der Zieladresse des Zugriffs entspricht, oder verweigert die Weiterleitung. Ist die Firewall beispielsweise direkt mit wenigstens zwei lokalen Netzwerken und weiteren Knoten oder Netzwerken außerhalb der lokalen Netzwerke verbunden, regelt sie somit Datenverkehr in drei Richtungen. In einer Ausführungsform ist die Firewall mit einem ersten Netzwerk in einem Gebäude und mit lokalen Netzwerken in einzelnen Wohnungen verbunden. Beispielsweise können Zugriffe zwischen den lokalen Netzwerken, die einzelnen Wohnungen des Gebäudes zugeordnet sind, verhindert werden und Zugriffe zwischen dem Gebäudenetzwerk und den lokalen Netzwerken zugelassen werden. Die Firewall kann über Weiterleitung oder Verweigerung anhand von Regeln entscheiden, die auf der Firewall gespeichert oder ihr anderweitig zugänglich sind.

Der Zugriff kann von einem Knoten innerhalb eines der Netzwerke erfolgen. Beispielsweise kann ein Bedienelement eines Knotens in einem Netzwerk, etwa in einer Wohnung, betätigt werden und hierdurch ein Zugriff ausgelöst werden, der die Adresse eines Knotens in einem zweiten der Netzwerke zum Ziel hat. Ein Beispiel ist das Öffnen einer Haustür, wobei das Öffnen über die Bedienung eines Displays in einer Wohnung ausgelöst wird, und aus einem Netzwerk der Wohnung in ein Gebäudenetzwerk geleitet wird, um an einem Knoten, der Funktionalität zum Öffnen der Haustür bereitstellt, die Tür zu öffnen. Alternativ kann ein solcher Zugriff von außerhalb der Netzwerke erfolgen, beispielsweise von einem Smartphone, das außerhalb des Gebäudes bedient wird und über ein lokales Netzwerk, etwa ein WLAN, das nicht zu den lokalen Netzwerken des Gebäudes gehört.

Über die Weiterleitung beziehungsweise Verweigerung eines Zugriffs kann anhand einer Herkunftadresse, Zieladresse, oder eines Zugriffsprotokolls entschieden werden. So kann die Firewall konfiguriert sein, bestimmte Herkunftadressen, die aus keinem der lokalen Netzwerke stammen, zuzulassen. Beispielsweise können Adressen von Smartphones der Bewohner des Gebäudes erfasst sein und entsprechende Zugriffe von solchen Adressen zugelassen werden. Diese Adressen können feste Hardware-Adressen sein oder solche aus bestimmten weiteren Netzwerken, beispielsweise Netzwerken, in deren Nähe sich ein Bewohner zu bestimmten Tageszeiten aufhält, etwa an einem Arbeitsplatz. Ferner kann die Firewall eingestellt sein, beliebige Herkunftadressen zuzulassen, die auf bestimmte Knoten in einem der lokalen Netzwerke zugreifen, beispielsweise auf eine Webcam an dem Gebäude, deren Daten öffentlich zugänglich sind. Außerdem können bestimmte Protokolle der Zugriffe zugelassen werden. Im Falle des Zugriffs auf eine Webcam kann dieser genau dann zugelassen werden, wenn er via HTTP erfolgt. Die Regeln, anhand derer die Firewall konfiguriert ist, können auch Kombinationen der vorgenannten Beispiele umfassen. Beispielsweise kann ein Zugriff von einem bestimmten Smartphone außerhalb der lokalen Netzwerke zugelassen werden, wenn er per HTTP erfolgt und an eine bestimmte Zieladresse gerichtet ist.

Ein weiteres Beispiel für das Zulassen eines Zugriffs ist ein Zugriff, der gemäß einem Protokoll mit einer bestimmten Payload oder einer stateful packet inspection (SPI) erfolgt. Die Regeln der Firewall können sowohl Zugriffe von außerhalb auf eines der Netzwerke als auch von innerhalb eines der Netzwerke auf ein anderes dieser Netzwerke, ferner aus einem Netzwerk nach außerhalb aller lokalen Netzwerke oder auch Zugriffe von außerhalb oder innerhalb auf die Firewall selbst kontrollieren.

Zugriffe auf die Firewall selbst können auf eine Anwendung gerichtet sein, die auf der Firewall abläuft. Eine derartige Anwendung kann beispielsweise eine Konfigurationsanwendung sein, mit der aus der Ferne Regeln und sonstige Einstellungen der Firewall konfiguriert werden können. In einer nicht beanspruchten Ausführungsform wird ein Zugriff dann an die Anwendung geleitet, wenn er an eine IP-Adresse gerichtet ist, die der Firewall entspricht. Beispielsweise kann die Firewall über eine global gültige IP-Adresse adressierbar sein und/oder über eine IP, die in einem Adressraum eines der lokalen Netzwerke gültig ist. Zusätzlich kann die Anwendung über eine Portnummer adressierbar sein, beispielsweise um mehrere Anwendungen auseinanderzuhalten, die auf der Firewall ablaufen, und um einen Zugriff an die richtige Anwendung zu leiten. Erfindungsgemäß kann die Firewall der Anwendung eine IP-Adresse zuordnen, die nicht mit der Adresse der Firewall identisch ist. In diesem Fall erkennt die Firewall einen Zugriff auf die Anwendung anhand der Adresse und leitet den Zugriff nicht an eines der Netzwerke, sondern an die Anwendung weiter. Alternativ kann eine solche Anwendung als Ziel eines Zugriffs anhand einer Kombination aus einer IP-Adresse der Firewall und einer Portnummer der Anwendung identifiziert werden.

Handelt es sich bei der Anwendung um eine Konfigurationsanwendung, kann sie infolge des Zugriffs reagieren und beispielsweise ein Sitzung mit dem Absender des Zugriffs beginnen. In diesem Fall gibt die Firewall einen entsprechenden Zugriff der Anwendung an den Absender weiter an das betreffende Netzwerk oder die betreffende Adresse außerhalb.

Ausführungsformen der Erfindung umfassen auch lokale Netzwerke, die nicht direkt mit der Firewall verbunden sind, sondern lediglich mit einem anderen Netzwerk verbunden sind, auf das von der Firewall direkt zugegriffen werden kann. Empfängt die Firewall einen Zugriff von oder auf ein solches indirektes Netzwerk, wird dieser über das andere Netzwerk an das indirekte Netzwerk geleitet. Dies kann beispielsweise im Wege eines Tunnels erfolgen, der ein Protokoll des indirekten Netzwerks durch ein Protokoll des anderen Netzwerks tunnelt. Ein Tunneln von Verbindungen ist bekannt als Übermitteln eines ersten Protokolls über ein zweites Protokoll. Die Erfindung nutzt diesen Mechanismus zum Kommunizieren mit indirekt verbundenen Netzwerken. Ein Beispiel für ein Tunnelprotokoll, das durch ein direkt mit der Firewall verbundenes Netzwerk bereitgestellt wird, ist das HTTPS/Websocket-Protokoll. Alternativ kann der Tunnel als Virtual Private Network (VPN) realisiert werden. Auch im Fall einer Weiterleitung an ein indirekt verbundenes Netzwerk wendet die Firewall Regeln zum Zulassen und Verweigern von Zugriffen an.

In den obigen Beispielen können Zugriffe von außerhalb der genannten Netzwerke erfolgen, also beispielsweise aus dem Internet, oder von innerhalb eines der Netzwerke. Außerdem kann ein Zugriff auch von der Firewall selbst erfolgen, beispielsweise durch eine Anwendung, die auf der Firewall abläuft. So kann eine Anwendung etwa selbständig bestimmte Funktionen an einzelnen Knoten in Netzwerken durchführen. Beispiele für solche Funktionen sind das Betätigen von Gebäudeelementen, die über Knoten in einem der Netzwerke erreichbar sind.

Vorteile der erfindungsgemäßen Firewall umfassen eine mindestens dreiseitige Steuerung von Datenverkehr zwischen wenigstens zwei lokalen Netzwerken sowie einem externen Knoten. Diese drei Einheiten können über lediglich eine Firewall in jeder Kombination von zwei dieser Einheiten kommunizieren. Ausführungsformen, die darüber hinaus eine Kommunikation mit einer Anwendung auf der Firewall selbst vorsehen, bieten darüber hinaus den Vorteil, einen physikalischen Anschluss einzusparen, der erforderlich wäre, wenn eine derartige Anwendung auf einem separaten Knoten liefe. Durch Kombinieren einer dreiseitigen Steuerung mit einem direkten Zugriff auf die Firewall wird die Netzwerktopologie daher vereinfacht.

Erfindungsgemäße Ausführungsformen umfassen Verfahren zum Empfangen eines Zugriffs an einer Firewall, wobei der Zugriff auf die Firewall oder auf ein lokales Netzwerk gerichtet ist. Wie erwähnt, können derartige Zugriffe aus einem der Netzwerke, die mit der Firewall verbunden sind, oder auch aus dem Internet stammen. Insbesondere können die Zugriffe auch von einem indirekt mit der Firewall verbundenen Netzwerk stammen, und sie können von der Firewall selbst stammen. Die Firewall entscheidet über Zulassen oder Verweigern eines Zugriffs anhand eines Protokolls des Zugriffs, einer Herkunftadresse des Zugriffs und/oder einer Zieladresse des Zugriffs. Beispielsweise kann die Firewall durch einen Administrator konfiguriert werden, um Zugriffe, die von in der Firewall eingetragenen IP-Adressen stammen, zuzulassen. Insbesondere können solche Zugriffe nur dann zugelassen werden, wenn sie gleichzeitig auf bestimmte, ebenfalls eingetragene IP-Adressen in einem der mit der Firewall verbundenen Netzwerke gerichtet sind. Darüber hinaus umfassen erfindungsgemäße Verfahren das Übermitteln eines Zugriffs an eine Anwendung auf der Firewall unter bestimmten Bedingungen. Erfindungsgemäß besteht die Bedingung darin, Zugriffe nur dann zuzulassen, wenn sie auf eine bestimmte IP-Adresse gerichtet sind, die der Anwendung zugeordnet ist.

Weitere Verfahrensbeispiele umfassen das Übermitteln eines Zugriffs an ein Netzwerk, das lediglich indirekt mit der Firewall verbunden ist, über ein weiteres Netzwerk, das mit der Firewall direkt verbunden ist. Hierzu wird beispielsweise ein Protokoll des direkten Netzwerks verwendet, um den Zugriff in einem anderen Protokoll, das in dem indirekten Netzwerk verwendet wird, mittels Tunneling zu übertragen, oder umgekehrt.

Die Erfindung wird typischerweise in einer Kombination aus Hardware und Software implementiert. So können etwa Regeln zur Entscheidung über bestimmte Zugriffe in einer Datenbank abgelegt werden, während technische Schnittstellen zur Kommunikation mit Netzwerken und deren Knoten vorzugsweise durch elektronische Bauteile implementiert werden. Insbesondere kann die Erfindung durch computerlesbare Medien mit gespeicherten Befehlen implementiert werden, die die hier offenbarten Ausführungsbeispiele durchführen.

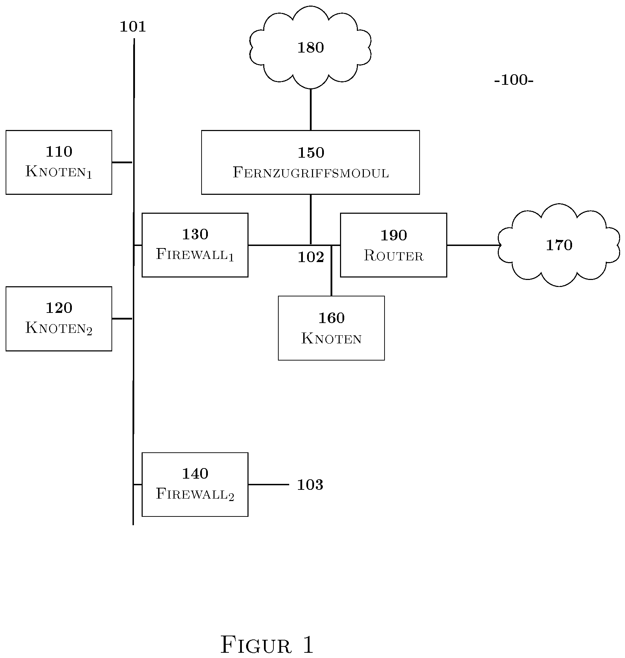

Figur 1 zeigt ein herkömmliches System 100 zur Steuerung von Zugriffen zwischen lokalen Netzwerken 102 und 103 sowie in diesen Netzwerken enthaltenen Knoten 110, 120, 160. Die lokalen Netzwerke sind über Firewalls 130 und 140 mit einem weiteren lokalen Netzwerk, hier als Gebäudenetzwerk 101 gezeigt, gekoppelt. Das lokale Netzwerk 102 enthält einen beispielhaften Knoten 160 und ist über einen Router 190 an weitere Netzwerke gekoppelt. Beispielsweise ist der Router 190 ein WLAN-Router und bietet Zugriff auf einen externen Knoten oder externes Netzwerk 170. Ein weiterer Knoten in dem lokalen Netzwerk 102 ist als Fernzugriffsmodul 150 gezeigt. Fernzugriffsmodul 150 ist mit einem externen Knoten oder externen Netzwerk 180 verbunden. Auf dem Fernzugriffsmodul 150 läuft eine Anwendung, die zum Empfangen von Zugriffen von dem externen Knoten 180 oder den weiteren Knoten des lokalen Netzwerks 102 eingerichtet ist.

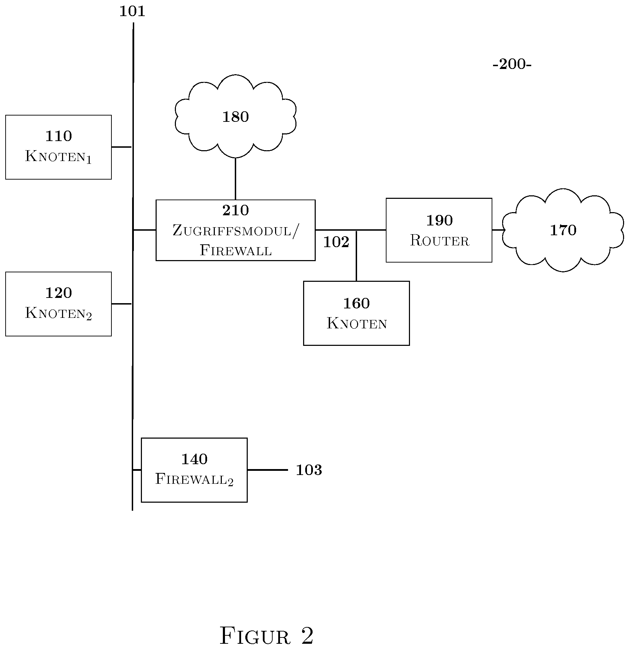

Figur 2 zeigt ein erfindungsgemäßes System 200, das insbesondere eine Firewall 210 mit zusätzlicher Funktionalität eines Zugriffsmoduls umfasst. Die Firewall 210 verbindet wenigstens zwei lokale Netzwerke 101 und 102 miteinander und ist ferner an ein externes Netzwerk oder externen Knoten 180 angebunden. Ein konkretes Beispiel für eine solche Topologie wäre ein Gebäudenetzwerk, das Funktionen wie etwa Haustür, Fahrstuhl, Treppenhausbeleuchtung steuert, und das mit lokalen Netzwerken verbunden ist, die in einzelnen Wohnungen des Gebäudes installiert sind und dort etwa Belüftungen, Heizung etc. steuern. In dieser Ausführungsform stellt die Firewall 210 Funktionalität bereit, um einzelnen Knoten 110, 120 der lokalen Netzwerke 101 und 102 Funktionen des Gebäudenetzwerks zugänglich zu machen. Die Erfindung umfasst auch Sterntopologien, bei denen sämtliche lokalen Netzwerke direkt mit der Firewall und über diese an das Gebäudenetzwerk angeschlossen sind. In einer besonderen Ausführungsform ist lediglich eine Teilmenge der lokalen Netzwerke direkt mit der Firewall verbunden, im Extremfall nur ein lokales Netzwerk. Die übrigen lokalen Netzwerke sind indirekt mit der Firewall verbunden, nämlich über andere lokale Netzwerke, die wiederum direkt mit der Firewall verbunden sind.

Die Firewall 210 erhält Zugriffe aus dem lokalen Netzwerk 102 und/oder von Knoten 110, 120 des Gebäudenetzwerks, in bestimmten Ausführungsformen auch direkt oder indirekt aus externen Netzwerken 180 oder 170, die entweder direkt oder über das lokale Netzwerk 102 mit der Firewall 210 verbunden sind, und prüft, ob die Zugriffe weiterzuleiten sind. Die Prüfung erfolgt gemäß einer der bereits erläuterten Maßnahmen, also etwa im Wege einer Prüfung von IP-Adressen des Adressaten und/oder Versenders eines Zugriffs. Ein Zugriff kann auch auf eine Anwendung erfolgen, die auf der Firewall 210 abläuft, und die durch eine IP-Adresse gekennzeichnet ist. Anhand dieser IP-Adresse kann über das Weiterleiten eines Zugriffs an diese Anwendung entschieden werden. Analog zu anderen hier offenbarten Beispielen kann ein Zugriff an die Anwendung übergeben werden, wenn eine Kombination aus Herkunftadresse des Zugriffs und Zieladresse, also der Adresse der Anwendung, des Zugriffs gemäß der Konfiguration der Anwendung zuzulassen sind. Darüber hinaus kann die Firewall 210 auch über Zugriffe entscheiden, die von einer Anwendung auf der Firewall selbst ausgehen. Wiederum wird hierzu anhand konfigurierter Regeln geprüft, ob der Zugriff zulässig ist.

Die Firewall 210 steuert somit Datenverkehr zwischen wenigstens drei Einheiten, nämlich den lokalen Netzwerken 101 und 102 sowie dem externen Knoten oder Netzwerk 180, die sämtlich direkt mit der Firewall 210 verbunden sind. Zugriffe aus dem Knoten/Netzwerk 180 können über die Firewall 210 auf Knoten 160 innerhalb des lokalen Netzwerks 102 oder auf Knoten 110, 120 innerhalb des lokalen Netzwerks 101 durchgeführt werden. Die Firewall 210 verfügt zusätzlich über die Funktionalität eines Zugriffsmoduls, indem sie externen Zugriff auf eine auf der Firewall 210 laufende Anwendung ermöglicht. Auf diese Weise kann von außerhalb oder innerhalb der lokalen Netzwerke beispielsweise eine interaktive Sitzung mit der Anwendung durchgeführt werden. Findet ein Zugriff von einem externen Knoten, beispielsweise Knoten 170, der nur über das lokale Netzwerk 102 mit der Firewall verbunden ist, statt, so kann dieser im Wege eines Tunnels über das lokale Netzwerk 102 durchgeführt werden. Durch die Bereitstellung einer Firewall mit Zugriffsmodulfunktionalität erzielt die Erfindung eine vereinfachte Netzwerktopologie, da wenigstens ein physikalischer Anschluss wegfällt, der für ein separates Zugriffsmodul erforderlich wäre.

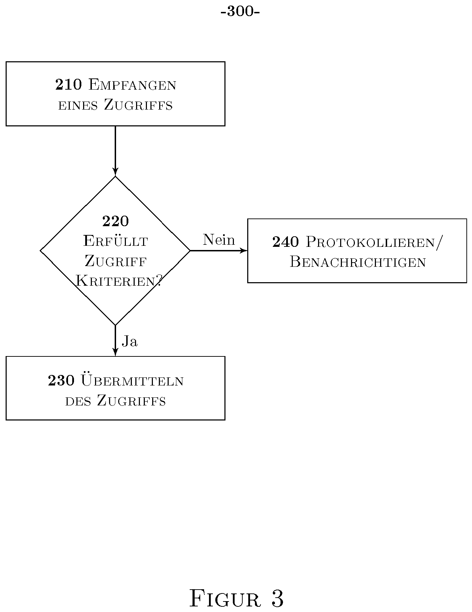

Figur 3 zeigt ein Verfahren 300 gemäß Ausführungsformen der Erfindung. In einem ersten Schritt 210 erhält eine Firewall, beispielsweise die Firewall 210, einen Zugriff in Form eines Datenpakets, das entweder an eine IP-Adresse der Firewall 210 oder eine IP-Adresse hinter der Firewall gerichtet ist. Der Zugriff kann also auch an ein Netzwerk oder einen Netzwerkknoten gerichtet sein, der nicht direkt mit der Firewall verbunden ist, sondern nur indirekt über weitere Knoten oder Netzwerke erreicht werden kann. Das im Folgenden erläuterte Verfahren kann ohne weiteres um jeden einzelnen Aspekt des oben unter Bezugnahme auf Figur 2 erläuterten Systems ergänzt werden.

Die Firewall 210 prüft in Schritt 220, ob Regeln zum Weiterleiten beziehungsweise Zurückweisungen des Zugriffs erfüllt sind. Diese Regeln können in einer lokalen Datenstruktur oder Datenbank auf der Firewall 210 abgelegt oder auf einer separaten Vorrichtung, die der Firewall zugänglich ist, gespeichert sein. Die Regeln können manuell durch einen Administrator konfiguriert werden, beispielsweise durch Interaktion mit einer auf der Firewall ablaufenden Anwendung. Die Regeln sind in einem geeigneten Format kodiert, beispielsweise in Form einer Prädikaten logik oder einer Programmiersprache, die die Definition von Prädikaten erlaubt.

Je nach Ergebnis der Anwendung der gespeicherten Regeln wird das Verfahren bei Schritt 230 oder Schritt 240 fortgesetzt. So erfolgt in Schritt 230 eine Weiterleitung an einen Netzwerkknoten beziehungsweise ein Netzwerk anhand der Zieladresse des Zugriffs, wenn keine Regeln vorliegen, die die Weiterleitung verhindern. Andernfalls wird die Weiterleitung bei Schritt 240 verhindert. Der Zugriff kann protokolliert werden, um das Auftreten des Zugriffs und auch das entsprechende Kriterium später nachvollziehen zu können. Alternativ oder zusätzlich kann eine Benachrichtigung erfolgen, entweder an einen Administrator oder auch an die Herkunftadresse des Zugriffs.

Ist der Zugriff entsprechend den Regeln zulässig, und entspricht die Zieladresse des Zugriffs einer IP-Adresse, die einer Anwendung auf der Firewall zugeordnet ist, so wird der Zugriff an keinen weiteren Knoten oder weiteres Netzwerk, sondern an die Anwendung selbst übermittelt. Auf diese Weise ermöglicht die Erfindung eine Verbindung von außerhalb eines Gebäudenetzwerks oder auch von innerhalb eines der Netzwerke oder Netzwerkknoten, die mit der Firewall verbunden sind, mit der Anwendung, beispielsweise um die Firewall zu konfigurieren. Ist der Zugriff hingegen an ein lokales Netzwerk gerichtet, dass nicht unmittelbar mit der Firewall verbunden ist, so kann der Zugriff an ein direkt mit der Firewall verbundenes Netzwerk übermittelt werden, um von dort aus an das Zielnetzwerk weitergeleitet zu werden, beispielsweise durch Anwendung herkömmlicher Routingmechanismen.

Insbesondere kann ein Tunnel über ein direkt verbundenes Netzwerk zu einem mittelbar erreichbaren Netzwerk eingerichtet werden. Dies bietet sich insbesondere an, wenn beide Netzwerke mit unterschiedlichen Protokollen kommunizieren, oder wenn der Zugriff selbst mittels eines Protokolls erfolgt, das in dem direkt verbundenen Netzwerk nicht verwendet werden kann oder soll.

Durch die Erfindung ist es somit möglich, Zugriffe zwischen einem Gebäudenetzwerk und lokalen Netzwerken zu kontrollieren. Obwohl insgesamt mehr als zwei Netzwerke kommunizieren, ist lediglich eine einzelne Firewall notwendig. Diese kann über eine Anwendung gesteuert und konfiguriert werden, wobei Zugriffe die von der Anwendung der gleichen Kontrolle wie andere Zugriffe unterliegen. Dadurch, dass die Firewall auch die Funktionalität eines Zugriffsmoduls umfasst und Zugriffe auf eine Anwendung auf eine Anwendung auf der Firewall ebenso wie andere Zugriffe einer Kontrolle hinsichtlich ihrer Regeln unterzieht, wird die Sicherheit für Zugriffe auf diese Anwendung erhöht. Um mit konventionellen Mitteln ein vergleichbares Maß an Sicherheit zu erreichen, wäre es erforderlich, ein separates Zugriffsmodul hinter einer eigenen Firewall anzuordnen. Dies hätte für die Netzwerktopologie einen großen Materialaufwand zur Folge, der durch die Erfindung vermieden wird.

## Patentansprüche

1. Eine Firewall (210), die mit wenigstens zwei lokalen Netzwerken (101, 102) und einem Knoten (180) außerhalb der lokalen Netzwerke (101, 102) verbunden und eingerichtet ist, Zugriffe auf eines der lokalen Netzwerke (101, 102) oder auf die Firewall (210) anhand einer Source-Adresse des Zugriffs und/oder einer Target-Adresse des Zugriffs zuzulassen oder zu verweigern, **dadurch gekennzeichnet, dass** wenigstens einer der Zugriffe auf eine Anwendung auf der Firewall (210) gerichtet ist, und wobei der Anwendung eine IP-Adresse zugeordnet ist, wobei die Firewall (210) eingerichtet ist, den Zugriff an die Anwendung zu übermitteln, wenn der Zugriff an die IP-Adresse gerichtet ist.

2. Firewall (210) nach Anspruch 2, wobei die Anwendung zum Einrichten einer interaktiven Sitzung mit einem Knoten (110, 120, 180) eingerichtet ist, von dem ein Zugriff stammt, und wobei die interaktive Sitzung über einen Tunnel zwischen dem Knoten und der Firewall eingerichtet wird und ein Protokoll des Zugriffs mit einem Protokoll eines der lokalen Netzwerke kombiniert.

3. System (200), umfassend:
Wenigstens zwei lokale Netzwerke (101, 102); und
eine Firewall gemäß dem Anspruch 1.

4. System (200) nach Anspruch 3, wobei einer der Zugriffe an die Anwendung auf der Firewall (210) übermittelt wird, insbesondere zur Einrichtung einer interaktiven Sitzung zwischen der Anwendung und einem Knoten (110, 120, 180), von dem der Zugriff erfolgt, insbesondere wobei die Sitzung der Konfiguration der Firewall dient.

5. System (200) nach Anspruch 4, wobei die IP-Adresse zu dem Adressraum eines der wenigstens zwei lokalen Netzwerke (101, 102) gehört.

6. System (200) nach einem der Ansprüche 3 bis 5, wobei ein Zugriff auf eines der lokalen Netzwerke (101, 102) über ein zweites der lokalen Netzwerke (101, 102) übermittelt wird, insbesondere wobei der Zugriff mittels eines Tunnels übermittelt wird, der ein Protokoll des ersten lokalen Netzwerks mit einem Protokoll des zweiten lokalen Netzwerks kombiniert.

7. System (200) nach Anspruch 6, wobei eines der Protokolle das HTTPS/Websocket-Protokoll oder das VPN-Protokoll ist.

8. Verfahren, umfassend:
Empfangen von Zugriffen an einer Firewall (210), die mit wenigstens zwei lokalen Netzwerken (101, 102) und einem Knoten (180) außerhalb der lokalen Netzwerke (101, 102) verbunden ist, **dadurch gekennzeichnet, dass** wenigstens einer der Zugriffe auf eine Anwendung auf der Firewall (210) gerichtet ist, wobei der Anwendung eine IP-Adresse zugeordnet ist; und
Zulassen oder Verweigern des Zugriffs durch die Firewall (210) anhand einer Source-Adresse des Zugriffs und/oder einer Target-Adresse des Zugriffs, wobei der Zugriff an die Anwendung übermittelt wird, wenn er an die IP Adresse gerichtet ist.

9. Verfahren nach Anspruch 8, ferner umfassend Übermitteln des Zugriffs an eines der lokalen Netzwerke (101, 102) über ein zweites der lokalen Netzwerke (101, 102), insbesondere wobei der Zugriff mittels eines Tunnels übermittelt wird, der ein Protokoll des ersten lokalen Netzwerks mit einem Protokoll des zweiten lokalen Netzwerks kombiniert.

10. Computerlesbares Medium mit darauf gespeicherten Befehlen, die bei Ausführung durch einen Prozessor das Verfahren nach einem der Ansprüche 8 oder 9 durchführen.

## Claims

1. A firewall (210) connected to at least two local area networks (101, 102) and a node (180) outside the local area networks (101, 102) and arranged to allow or deny accesses to one of the local area networks (101, 102) or to the firewall (210) based on a source address of the access and/or a target address of the access, **characterised in that** at least one of the accesses is directed to an application on the firewall (210), and wherein the application is assigned an IP address, the firewall (210) being arranged to communicate the access to the application when the access is directed to the IP address.

2. The firewall (210) of claim 2, wherein the application is arranged to establish an interactive session with a node (110, 120, 180) from which an access originates, and wherein the interactive session is established via a tunnel between the node and the firewall and combines a protocol of the access with a protocol of one of the local area networks.

3. A system (200) comprising:
at least two local area networks (101, 102); and
a firewall (210) according to claim 1.

4. The system (200) according to claim 3, wherein one of said accesses is transmitted to said application on said firewall (210), in particular for establishing an interactive session between said application and a node (110, 120, 180) from which said access is made, in particular wherein said session is for configuring said firewall.

5. The system (200) according to claim 4, wherein said IP address belongs to the address space of one of said at least two local area networks (101, 102).

6. The system (200) according to any one of claims 3 to 5, wherein an access to one of said local networks (101, 102) is transmitted via a second one of said local networks (101, 102), in particular wherein said access is transmitted by means of a tunnel combining a protocol of said first local network with a protocol of said second local network.

7. The system (200) according to claim 6, wherein one of the protocols is the HTTPS/web socket protocol or the VPN protocol.

8. A method comprising:
Receiving accesses at a firewall (210) connected to at least two local area networks (101, 102) and a node (180) external to the local area networks (101, 102), **characterised in that** at least one of the accesses is directed to an application on the firewall (210), the application being assigned an IP address; and
Allowing or denying the access by the firewall (210) based on a source address of the access and/or a target address of the access, wherein the access is transmitted to the application when directed to the IP address.

9. The method according to claim 8, further comprising transmitting said access to one of said local area networks (101, 102) via a second one of said local area networks (101, 102), in particular wherein said access is transmitted by means of a tunnel combining a protocol of said first local area network with a protocol of said second local area network.

10. A computer-readable medium having instructions stored thereon which, when executed by a processor, perform the method of any one of claims 8 or 9.

## Revendications

1. Firewall (210) qui est relié avec au moins deux réseaux locaux (101, 102) et un nœud (180) à l'extérieur des réseaux locaux (101, 102) et qui est conçu pour accepter ou refuser des accès à un des réseaux locaux (101, 102) ou au firewall (210) à l'aide d'une adresse source de l'accès et/ou d'une adresse cible de l'accès, **caractérisé en ce qu'**au moins un des accès est dirigé vers une application sur le firewall (210) et dans lequel, à l'application correspond une adresse IP, dans lequel le firewall (210) est conçu pour transmettre l'accès à l'application lorsque l'accès est dirigé vers l'adresse IP.

2. Firewall (210) selon la revendication 2, dans lequel l'application est conçue pour la configuration d'une session interactive avec un nœud (110, 120, 180), d'où provient un accès, et dans lequel la session interactive est configuré par l'intermédiaire d'un tunnel entre le nœud et le firewall et combine un protocole de l'accès avec un protocole d'un des réseaux locaux.

3. Système (200) comprenant :
au moins deux réseaux locaux (101, 102) ; et
un firewall selon la revendication 1.

4. Système (200) selon la revendication 3, dans lequel un des accès est transmis à l'application sur le firewall (210), plus particulièrement pour la configuration d'une session interactive entre l'application et un nœud (110, 120, 180), d'où l'accès a lieu, plus particulièrement dans lequel la session permet la configuration du firewall.

5. Système (200) selon la revendication 4, dans lequel l'adresse IP appartient au domaine d'adresse d'un des au moins deux réseaux locaux (101, 102).

6. Système (200) selon l'une des revendications 3 à 5, dans lequel un accès à un des réseaux locaux (101, 102) est transmis par l'intermédiaire d'un deuxième des réseaux locaux (101, 102), plus particulièrement dans lequel l'accès est transmis au moyen d'un tunnel qui combine un protocole du premier réseau local avec un protocole du deuxième réseau local.

7. Système (200) selon la revendication 6, dans lequel un des protocoles est le protocole HTTPS/Websocket ou le protocole VPN.

8. Procédé comprenant :
la réception d'accès au niveau d'un firewall (210), qui est relié avec au moins deux réseaux locaux (101, 102) et un nœud (180) à l'extérieur des réseaux locaux (101, 102), **caractérisé en ce qu'**au moins un des accès est dirigé vers une application sur le firewall (210), dans lequel, à l'application, correspond une adresse IP ; et
l'acceptation ou le refus de l'accès par le firewall (210) à l'aide d'une adresse source de l'accès et/ou d'une adresse cible de l'accès, dans lequel l'accès est transmis ç l'application lorsqu'il est dirigé vers l'adresse IP.

9. Procédé selon la revendication 8, comprenant en outre la transmission de l'accès à un des réseaux locaux (101, 102) par l'intermédiaire d'un deuxième des réseaux locaux (101, 102), plus particulièrement dans lequel l'accès est transmis au moyen d'un tunnel qui combine un protocole du premier réseau local avec un protocole du deuxième réseau local.

10. Support lisible par un ordinateur avec des instructions enregistrées sur celui-ci, qui lors de l'exécution par un processeur permettent d'exécuter le procédé selon l'une des revendications 8 ou 9.
